# EUROPEAN PATENT SPECIFICATION

(11) **EP 4 346 007 B1**
(45) Date of publication and mention of the grant of the patent: **03.06.2026**
(21) Application number: 22197999.0
(22) Date of filing: 27.09.2022
(51) Int. Cl.: H01Q 1/22, H01Q 9/04, H04B 7/14

(54) **CONTACTLESS MULTI-DROP AND BROADCAST BIDIRECTIONAL COMMUNICATION SYSTEM**
KONTAKTLOSES BIDIREKTIONALES KOMMUNIKATIONSSYSTEM MIT MEHREREN STATIONEN UND RUNDFUNKÜBERTRAGUNGEN
SYSTÈME DE COMMUNICATION BIDIRECTIONNELLE SANS CONTACT À MULTIPOINT ET DIFFUSION

(43) Date of publication of application: 03.04.2024
(73) Proprietor: INTEL Corporation, Santa Clara, CA 95054 (US)
(72) Inventor: ZHOU, Zhen, Chandler, AZ, 85248 (US); ACIKALIN, Tolga, San Jose, CA, 95118 (US); FOUST, Kenneth, Beaverton OR, 97007 (US); YAMADA, Shuhei, Hillsboro OR, 97124 (US); YANG, Tae Young, Portland OR, 97229 (US); COX, Timothy F., Palo Alto CA, 94303 (US); LIU, Renzhi, Portland, OR, 97229 (US); DORRANCE, Richard, Hillsboro, OR, 97124 (US); ESCOBAR PELAEZ, Johanny, 45037 Zapopan, JL (MX)
(74) Representative: Viering, Jentschura & Partner mbB Patent- und Rechtsanwälte

(56) References cited:
- WO-A1-01/24407
- US-A1- 2007 205 946
- US-A1- 2012 319 496
- US-A1- 2018 227 963
- US-B2- 10 476 545
- HWANGBO SEAHEE ET AL: "Directional through Glass Via (TGV) Antennas for Wireless Point-to-Point Interconnects in 3D Integration and Packaging", 2017 IEEE 67TH ELECTRONIC COMPONENTS AND TECHNOLOGY CONFERENCE (ECTC), IEEE, 30 May 2017 (2017-05-30), pages 260 - 265, XP033136061, DOI: 10.1109/ECTC.2017.258

## Description

### Technical Field

The present disclosure relates to contactless multi-drop and broadcast bidirectional communication systems and antenna structures for wireless communications.

### Background

Today's emerging technologies and applications continue to increasingly demand or require greater computational power. More input-outputs (I/Os) and functionalities have been added in each generation of server or client computing products to enhance the computing horsepower and user experiences along with more sideband signals for testing and control purpose. However, it becomes extremely difficult to implement the I/Os and functionalities in a single motherboard, and consequently the industry ended up with splitting a single motherboard into a few motherboards as a pragmatic approach.

The communication between the split motherboards currently relies on cable-based interconnects. However, the physically wired cable-based solutions typically require connectors to be placed at the edge of the motherboards, which takes a significant amount of motherboard area. In case that the signal originates in the center of the motherboard, the signal must be routed towards the edge of the motherboard which adds routing complexity.

Previously, wireline interconnects such as cable connections, and directive wireless communication has been used to overcome these challenges. However, wireline interconnects lack the flexibility of broadcasting and multi-drop besides the routing difficulties and mechanical problems. Further, conventional wireless communication can experience multipath problem and high channel loss, and hence the communication distance of wireless communications can be very limited.

Some of the issues of wireline interconnects have been addressed by US 10,476,545 B2, US 2018/227963 A1, US 2012/319496 A1, US 2007/205946 A1, WO 01/24407 A1 or by HWANGBO SEAHEE ET AL: "Directional through Glass Via (TGV) Antennas for Wireless Point-to-Point Interconnects in 3D Integration and Packaging", 2017 IEEE 67TH ELECTRONIC COMPONENTS AND TECHNOLOGY CONFERENCE (ECTC), IEEE, 30 May 2017, pages 260-265, XP033136061, DOI: 10.1109/ECTC.2017.258. However, said documents still have many of the above mentioned shortcomings and further improvements are required.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:
FIGS. 1A to 1C show schematic cross-sections of device-to-device communication systems;
FIGS. 2A and FIG.2B show schematic top views of a communication link structure of a device-to-device communication system;
FIGS.3A to 3G show illustrations of various device-to-device communication systems;
FIGS.4A to 4D illustrate an antenna structure for a device-to-device communication system;
FIGS.5A to 5D illustrate another antenna structure for a device-to-device communication system; and
FIGS.6A to 6C illustrate another antenna structure for a device-to-device communication system.

### Description

The following detailed description refers to the accompanying drawings that show, by way of illustration, specific details and embodiments in which the invention defined only by the appended claims may be practiced.

The word "over" used with regards to a deposited material formed "over" a side or surface, may be used herein to mean that the deposited material may be formed "directly on", e.g. in direct contact with, the implied side or surface. The word "over" used with regards to a deposited material formed "over" a side or surface, may be used herein to mean that the deposited material may be formed "indirectly on" the implied side or surface with one or more additional layers being arranged between the implied side or surface and the deposited material.

The device-to-device communication system provided employs near field antennas and a transmission line to realize contactless multi-drop communications between devices of split motherboards, e.g. a controller and devices. Thus, the device-to-device communication system enables signal escape about in the middle of a printed circuit board (PCB) wirelessly and to which the signal propagate through as a guided wave structure implented in a flex substrate which may be attached to a chassis for routing flexibility. Alternatively, or in addition, the number of PCB layers can be reduced and the routing space currently reserved for those sideband signals may be repurposed for the usage which can benefit some of the high-speed signals' integrity.

Thus, compared to current state-of-the-art wired solutions, the device-to-device communication system may provide multi-drop, and hence offers flexible floor planning for a split motherboard placements. Further, different from a previously used wireless communications, the device-to-device communication system may reduce reflection, path loss, and hence may increase the transmission distance. Thus, since a part of signal propagation happens as a guided wave, the group delay distortion introduced by the communication channel is lower than in a previously used wireless channel. Therefore the equalization and decoding can be simplified to save power, reduce latency, and reduce design complexity and engineering cost.

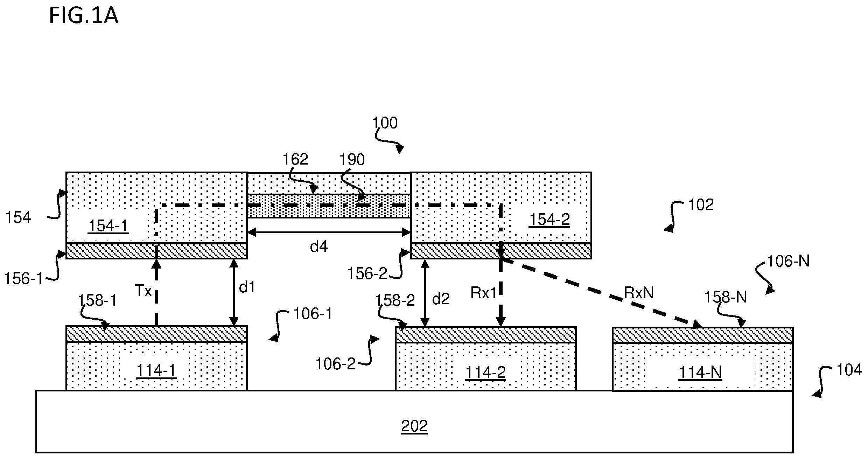

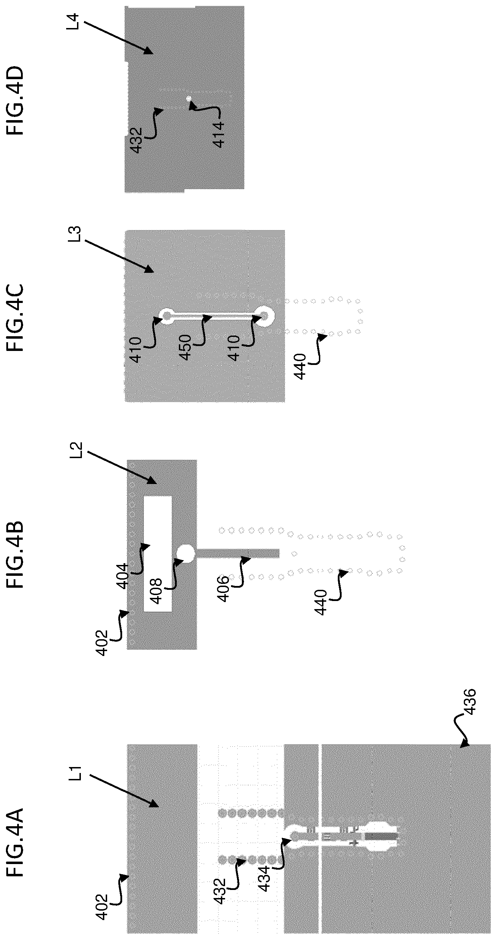

Details of the contactless multi-drop and broadcast bidirectional communication system are illustrated in FIG.1A to FIG.3G. A compact package integrated near field complementary dipole antenna that may be used in the contactless multi-drop and broadcast bidirectional communication system is illustrated in FIG.4A to FIG.6C.

**FIG.1A** illustrates a schematic cross-section of a device-to device communication system 100. In the following, the device-to device communication system 100 will be explained using the illustrative example of a chiplet-to-chiplet communication system.

A chiplet may be a functional block in the form of an integrated circuit that can be specifically designed to work with other chiplets to form larger more complex chip packages. That is, chiplets may refer to the independent constituents which make up a chip package built out of multiple chiplets. Chiplet(s) may be provided with or without encapsulating material packaging the chiplet(s). As used herein, the term "chiplet" includes an integrated circuit block of a multi-chip module (MCM) or MCM devices.

A chiplet can be considered as typically a sub processing unit or circuitry or a disaggregated functional resource with a specialized function that is designed to integrate with other chiplets of a common multi-chip device or module or circuitry. A chiplet may be fabricated on its own individual semiconductor die with physical dimensions that are often smaller than other chips. The MCM provides interconnections of the chiplets so as to form complete electronic function(s). The MCM may be an electronic assembly where multiple chiplets and/or other discrete components are integrated so that in operation, the multiple chiplets can be treated as if they were a larger integrated circuit. The integration of disaggregated resources by way of integrating chiplets in a module may provide the computational power needed for today's applications.

An MCM can be an electronic assembly that may be a single package including multiple components or circuitries. An MCM can be a plurality of chiplets arranged in a single package including die-to-die interconnect schemes for connecting the chiplets. In such cases, the chiplets of an MCM can be integrated and mounted onto a unifying carrier, so that in use it can be treated as if it were a larger IC. The unifying carrier may be a package carrier or system carrier. The chiplets (and possibly other components) of the MCM may also share a common enclosure or encapsulation and a common integrated heat spreader (IHS).

An MCM may in some cases include components other than chiplets. That is, an MCM may include integrated devices that have their own packaging, such as, for example, Central Processing Units (CPUs), Graphical Processing Units (GPUs), Field Programmable Gate Arrays (FPGA), Digital Signal Processors (DSPs), Application-Specific Integrated Circuits (ASICs) etc. Such components with their own packaging can be arranged on a common carrier or base layer (e.g. the system carrier or motherboard) within in relatively close proximity to each other in the MCM.

However, the devices of the device-to-device communication system 100 are not limited to chiplets and MCM. As an example, a device may be any kind of a die, a chip, a module, or a rack. Thus, the device-to device communication system may be symmetrical, e.g. a chiplet-to- chiplet communication system or may be asysmmetrical, e.g. a chip-to-rack communication system.

The device-to-device communication system 100 may include a plurality of packages 106 wirelessly coupled to a communication link structure 102 (illustrated as dashed line arrow Tx, Rx in FIG.1A) that provides a wired communication link (illustrated as dash-dotted line arrow 190 in FIG.1A). This way, the routing of the package communication interconnections between indidivdual packages of the plurality of packages 106 can be simplified.

Illustratively, the device-to device communication system 100 may include a first carrier 114-1 and a first antenna 158-1 mounted on the first carrier 114-1, and a second carrier 154-1 and a second antenna 156-1 mounted on the second carrier 154-1. The first antenna 158-1 and the second antenna 156-1 may be arranged relative to each other so that the first antenna 158-1 and the second antenna 156-1 can communicate wirelessly with each other (in FIG.1A illustrated by a dashed arrow Tx). The first carrier 114-1 and the second carrier 154-1 may be arranged at a predefined first distance d1 from each other. The first distance d1 may be smaller than or equal to about three times the wavelength of a wireless signal Tx transmitted between the first antenna 158-1 and the second antenna 156-1. The first antenna 158-1 and the second antenna 156-1 may be galvanically separated from each other.

The device-to device communication system 100 may further include a third carrier 154-2 and a third antenna 156-2 mounted on the third carrier 154-2, and a fourth carrier 114-2 and a fourth antenna 158-2 mounted on the fourth carrier 114-2. The third antenna 156-2 and the fourth antenna 158-2 may be arranged relative to each other so that the third antenna 156-2 and the fourth antenna 158-2 can communicate wirelessly with each other (in FIG.1A illustrated by a dashed arrow Rx1). The third carrier 154-2 and the fourth carrier 114-2 may be arranged at a predefined second distance d2 from each other. The second distance d2 may be smaller than or equal to about three times the wavelength of a wireless signal transmitted between the third antenna 156-2 and the fourth antenna 158-2. The third antenna 156-2 and the fourth antenna 158-2 may be galvanically separated from each other.

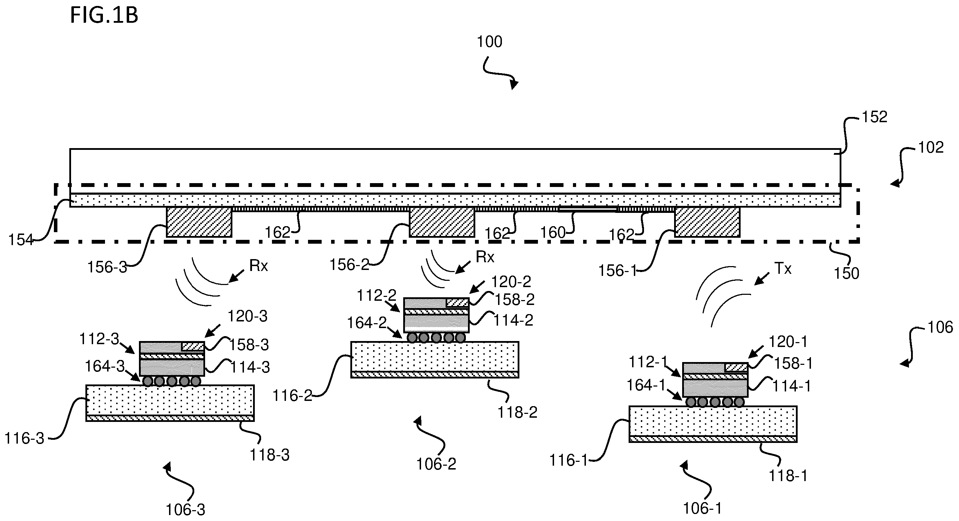

The device-to device communication system 100 may further include a waveguide structure 162. The waveguide structure 162 may be a guided-wave strucutre. Alternatively, or in addition, the waveguide structure 162 may be transmission medium. Alternatively, or in addition, the waveguide structure 162 may be a transmission line. A first portion of the waveguide structure 162 may be mechanically coupled to the second antenna 156-1 and a second portion of the waveguide structure 162 (see FIG.1B) may be physically coupled to the third antenna 156-2 to allow a transmission of electromagnetic signals between the second antenna 156-1 and the third antenna 156-2 via the waveguide structure 162 (in FIG.1A illustrated by a dashed-dotted arrow 190). The waveguide structure 162 may be a structure selected from a transmission line; a waveguide; and a microstrip line or a combination thereof. Illustratively, the waveguide structure 162 may be a wired transmission line for communication signals, e.g. electrical signals and/or optical signals.

Illustratively, the first antenna 158-1 of a first package106-1 wirelessly transmits Tx a signal to corresponding second antenna 156-1 of the communication link structure 102. The second antenna 156-1 receives the signal and propagates the signal 190 towards the third antenna 156-2 of the communication link structure 102 through a waveguide structure 162. The third antenna 156-2 wirelessly broadcasts Rx1, RxN the signal towards the second package 106-2 and any further package 106-N within range. As an example, the range maybe three times the wavelength of the signal to be transmitted. The respective antenna 158-2, 158-N of the package 106-2, 106-N receives the signal.

Thus, unlike the conventional contactless communication systems which only serve a point-to-point communication, the illustrated device-to-device communication system 100 uses two or more antennas 156-1, 156-2 in the communication link structure 102. The antennas 156-1, 156-2 of the communication link structure 102 may be fabricated on a very thin flexible substrate 154 and may be interconnected through the waveguide structure 162 as a transmission line to form a bell-bar shape of a communication link on the flexible substrate 154. The device-to-device communication system 100 extends the link distance d1, d2 while enabling bidirectional multi-drop and broadcast capability by maintaining the wireless channels as short as possible, e.g. to the length of the distance of the packages to the communication link structure, while utilizing the low loss transmission medium of the waveguide structure (of the length of d4) on the flexible substrate 154 to extend the channel length.

The packages 106-1, 106-2, 106-N may be formed on different package carriers 114-1, 114-2, 114-N, e.g. motherboards. At least one of the first carrier 114-1 or the fourth carrier 114-2 may be rigid carriers. Alternatively, or in addition, at least one of the first carrier 114-1 or the fourth carrier 114-2 may be printed circuit boards. At least one of logic circuitry may be mounted on the first carrier 114-1 or logic circuitry may be mounted on the fourth carrier 114-2.

At least one of the second carrier 154-1 or the third carrier 154-2 may be flexible carriers, e.g. the second carrier 154-1 and the third carrier 154-2. Alternatively, or in addition, at least one of the second carrier 154-1 or the third carrier 154-2 may be flexible printed circuit boards (e.g. FlexPCBs).

The device-to device communication system 100 may further include a system carrier 202. The first carrier 114-1 and the fourth carrier 114-2 may be mounted on the system carrier 202.

The device-to device communication system 100 may further include at least one further carrier 114-N and a further antenna 158-N mounted on the further carrier 114-N (in general an arbitrary number of further carriers and further antennas mounted on the further carrier, e.g. two, three, four, or even more). The third antenna 156-2 and the further antenna 158-N may be arranged relative to each other that the third antenna 156-2 and the further antenna 158-N can communicate wirelessly with each other (in FIG.1A illustrated by a dashed arrow RxN). The third antenna 156-2 and the at least one further antenna 158-N may be galvanically separated from each other. The at least one further carrier 114-N may be positioned next to the fourth carrier 114-2 on the common system carrier 202. The at least one further carrier 114-N may be a rigid carrier. Alternatively, or in addition, the at least one further carrier 114-N may be a printed circuit board. At least one of logic circuitry may be mounted on the at least one further carrier 114-N. The further carrier 114-N and the further antenna 158-N may be encapsulated in a further package.

The first carrier 114-1 and the first antenna 158-1 may be encapsulated in a first package 106-1. The fourth carrier 114-2 and the fourth antenna 158-2 may be encapsulated in a second package 106-2. In other words, the system 100 may include a first package 106-1 and at least a second package 106-2. The first package 106-1 may include the first carrier 114-1 and the first antenna 158-1. The second package 106-2 may include the fourth carrier 114-2 and the fourth antenna 158-2. The first package 106-1 and the second package 106-2 may be mounted on a shared system carrier 202.

One or more further package(s) 106-N (with N being between 2 and M, with M being an integer) may include respectively a further carrier 114-N and a further antenna 158-N. The third antenna 156-2 and the further antenna 158-N may be configured to establish a further wireless communication connection RxN.

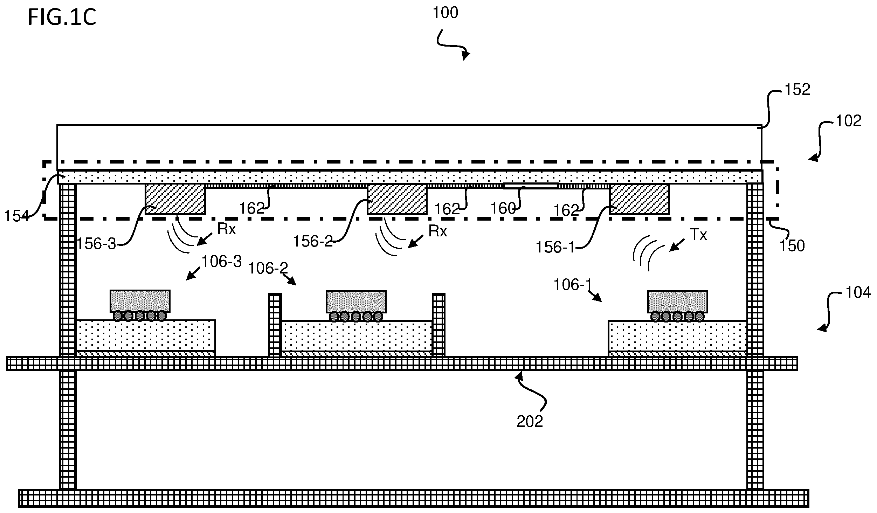

**FIG.1****B** illustrates another schematic cross-section of device-to-device communication system 100 as described above.

FIG.1B shows three packages 106-1, 106-2, 106-3 of a device-to-device communication system 100, i.e. a first package 106-1, a second package 106-2, and a third package 106-3. Each of the packages 106-1, 106-2, 106-3 may have a chiplet 120-1, 120-2, 120-3 coupled to the respective chiplet carriers 114-1, 114-2, 114-3. Each of the chiplets 120-1, 120-2, 120-3 may have a respective antenna 158-1, 158-2, 158-3.

The chiplet carriers 114-1, 114-2, 114-3 may be coupled to package carriers 116-1, 116-2, 116-3 via non-releasable interconnections 164-1, 164-2, 164-3, e.g. one of a ball grid array, a pin grid array, a land grid array or similar.

Each of the chiplets 120-1, 120-2, 120-3 may have a ground plane 112-1, 112-2, 112-3.

Each of the package carriers 116-1, 116-2, 116-3 (in FIG.1A denoted as carriers) may have a ground plane 118-1, 118-2, 118-3.

The package carriers 116-1, 116-2, 116-3 may be arranged independently from each other in space, e.g. in the same level or different levels (illustrated in FIG.1B).

FIG.1B further illustrates that the communication link structure 102 may include an antenna carrier 154 that may be shared for the antennas 156-1, 156-2, 156-3 and/or the waveguide structure 162 of the communication link structure 102. In other words, the second carrier 154-1 and the third carrier 154-2 as described in FIG.1A may be separated carriers or may be sections of a shared antenna carrier 154 (also denoted as communication link carrier 154). The communication link carrier 154 may be a flexible printed circuit board for example, a foil with or without back side ground plane as described in more detail below.

The communication link carrier 154 may be attached to a chassis 152 or a thermal solution, e.g. a heat spreader, located above the packages 106-1, 106-2, 106-3. The chassis 152 may be part of the packaging, housing or thermal solution of the module having the plurality of chiplets 106. As an example, the housing or packaging of the module may further include the system carrier 202 as illustrated in **FIG.1C**

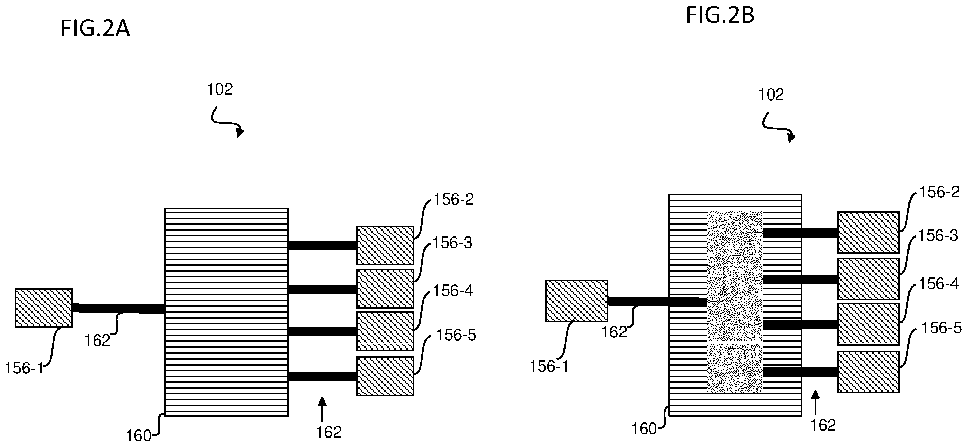

As further illustrated in FIG.1B, the device-to-device communication system 100 includes wireless communications section Tx, Rx between individual packages 106-1, 106-2, 106-3 and the communication link structure 102, and wired communication sections within the communication link structure 102 using one or more waveguide structures 162 and multiplexing structures 160. The multiplexing structure 160 is described in more detail below, e.g. see FIG.2A and FIG.2B.

The device-to-device communication system 100 provides communication links between the packages 106-1, 106-2, 106-3 that may otherwise not be possible, e.g. due to the arrangement of the packages 106-1, 106-2, 106-3 relative to each other as illustrated in FIG.1C. Note that reference numerals of components of the packages 106-1, 106-2, 106-3 have been omitted in FIG.1C to avoid an unnessary obstruction only.

**FIG.2A** and **FIG.2B** illustrate schematic top views of the communication link structure 102, e.g. the routing of the plurality of antennas 156-j (with j being an integer). Here, an antenna 156-1 may be coupled to two or more antennas 156-2, 156-3, 156-4, 156-5 by a multiplexing structure 160 via waveguide structures 162. Illustrativly, the multiplexing structure 160 illustrated in Fig. 2A may be a signal splitter, e.g. a 1-to-4 splitter as illustrated in FIG.2B. However, the multiplexing structure 160 may be any kind of a conventional signal routing structure, e.g. a switch, a bridge, a hub. This way, a signal received at the first antenna 156-1 may be routed to one or more or each of the antennas 156-2, 156-3, 156-4, 156-5.

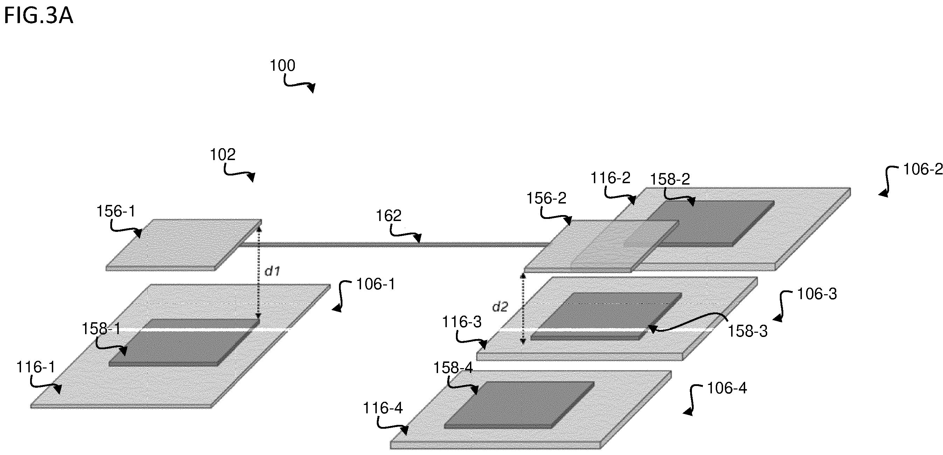

**FIG.3A to FIG.3G** show illustrations of various device-to-device communication systems. Note that the designation of components, e.g. first antenna, second antenna, etc., may differ from the designation of components in the respective figures depending on the repsective illustrated feature of the communication system. The designation is only used to destinguish one component from another component. However, reference numerals designate the same components throughout the description.

FIG.3A illustrates a device-to-device communication system 100 as descibed above wherein a first package 106-1 is communicatively coupled to one or more further packages 106-2, 106-3, 106-4 via the communication link structure 102. The communication link structure 102 may include a first antenna 156-1 wirelessly coupled to the antenna 158-1 of the first package 106-1 and a second antenna 156-2 wirelessly coupled to the antenna(s) 158-2, 158-3, 158-4 of one or more further packages 106-2, 106-3, 106-4. The first antenna 156-1 of the communication link structure 102 may be wirebound to the second antenna 156-2 of the communication link structure 102 via the waveguide structure 162. Note that one or more packages 106-2, 106-3, 106-4 may be wirelessly coupled to a single antenna 156-2, as illustrated in FIG.3A. Thus, the second antenna 156-2 may provide a broadcast or multi-drop to the further packages 106-2, 106-3, 106-4.

Packages 106-2, 106-3, 106-4 adjacent to each other, e.g. in a sufficient proximity, may directly wirelessly communicate with each other, e.g. in case the lateral distance between adjacent packages 106-2, 106-3, 106-4 is less than about three times the wavelength of the signal. A direct wireless communication may use a near field communication link of the respective packages 106-2, 106-3, 106-4 also used to communicate with the antenna 158-2 of the communication link structure 102. Alternatively, or in addition, the antenna 158-2 may be shared by packages 106-2, 106-3, 106-4 to relay the wireless communitation between adjacent packages 106-2, 106-3, 106-4, e.g. in case the distance between adjacent packages is larger than three times the wavelength of the signal, or a system carrier 202 or the alignment of packages 106-2, 106-3, 106-4 obstructs a direct communication between adjacent packages 106-2, 106-3, 106-4 (see also FIG.1C). As an illustrative example, the distance between a second package 106-2 and a third package 106-3 may support a direct wireless communication link using their near field communication used to communicate with second antenna 158-2. However, the distance between the second package 106-2 and a fourth package 106-4 or their relative alignment may not allow a direct wireless communication using their near field communication. Thus the communication link between the second package 106-2 and the fourth package 106-4 may include the second antenna 158-2 as a relay station to relay the communication between the second package 106-2 and the fourth package 106-4.

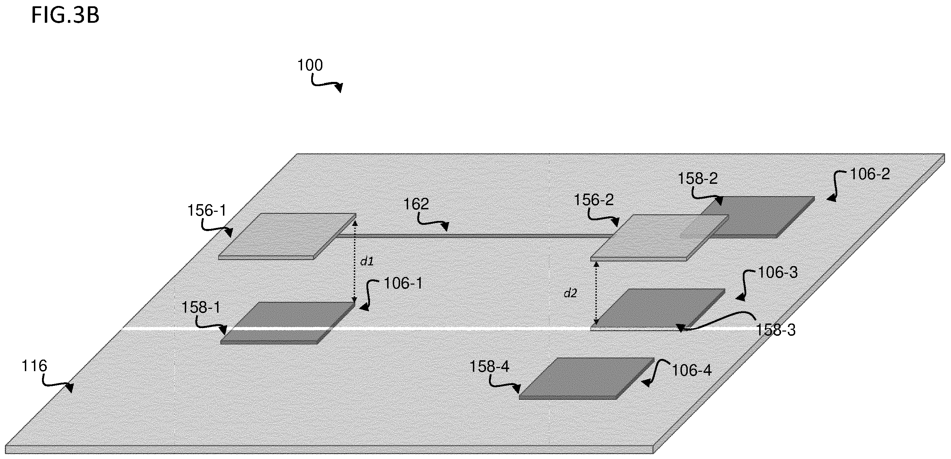

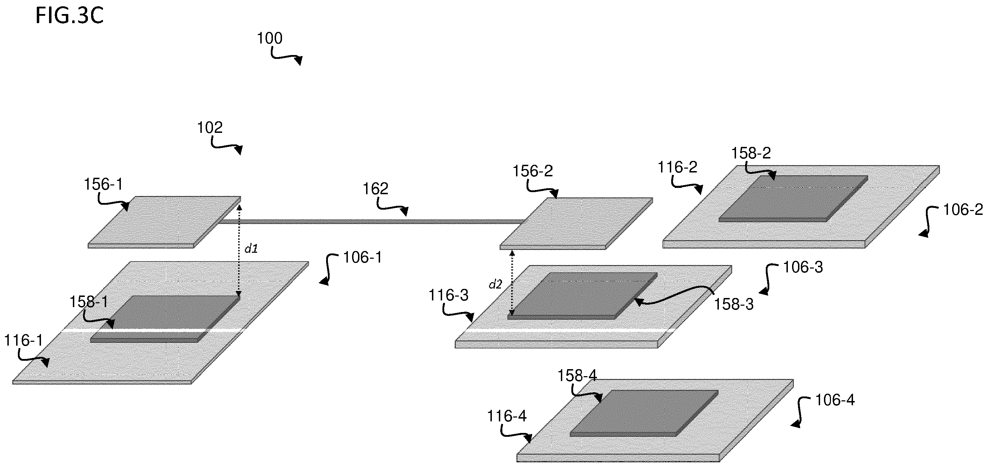

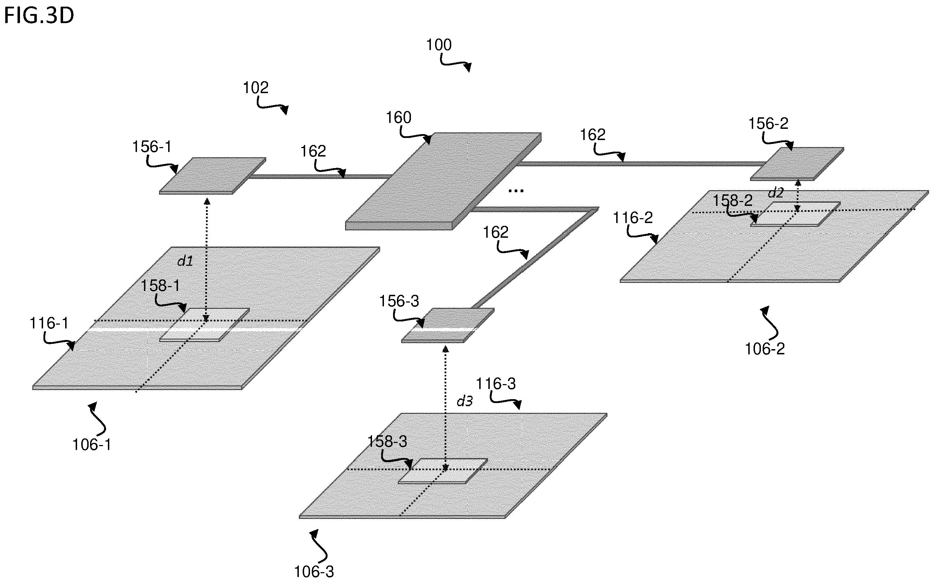

Further illustrated in FIG.3A, two or more or each of the packages 106-1, 106-2, 106-3, 106-4 may be formed on individual package carriers 116-1, 116-2, 116-3, 116-4, e.g. separated motherboards 116-1, 116-2, 116-3, 116-4. Alternatively, as illustrated in **FIG.3B****,** two or more packages 106-1, 106-2 ,106-3, 106-4 of the plurality of packages may be formed on a common package carrier 116 or system carrier, e.g. share the same motherboard as package carrier 114. Further, alignment, orientation, level, and positioning of packages 106-1, 106-2,106-3, 106-4 may be adapted depending on the application as illustrated in **FIG.3C** and **FIG.3D****.** In other words, the packages 106-2 ,106-3, 106-4 where the receiving antennas reside are not necessarily aligned and may be scattered around the second antenna 156-2 of the communication link structure 102 as long as they can receive the signal transmitted by the second antenna 156-2 of the communication link structure 102.

As an example, as illustrated in FIG.3D, a first package 106-1 may be arranged in a first distance d1 from the communication link structure 102, a second package 106-2 may be arranged in a second distance d2 from the communication link structure 102, and a third package 106-3 may be arranged in a third distance d3 from the communication link structure 102. Fig. 3D shows three packages for illustration purpose only,and the device-to-device communication system may include further packages (illustrated by "..." in FIG.3D).

Each of the distances d1, d2, d3 may be selected independently from the others. The distance d1, d2, d3 between the packages and the communication link structure 102 may be in a range from about 0.5 mm to about 5 mm, respectively.

In other word, the packages 106-1, 106-2, 106-3 may be arranged in different levels to each other.

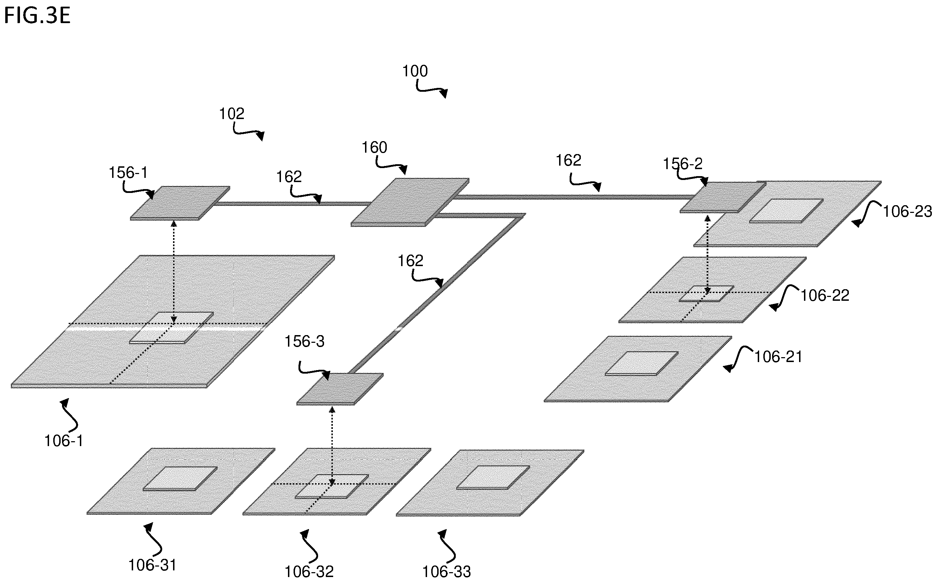

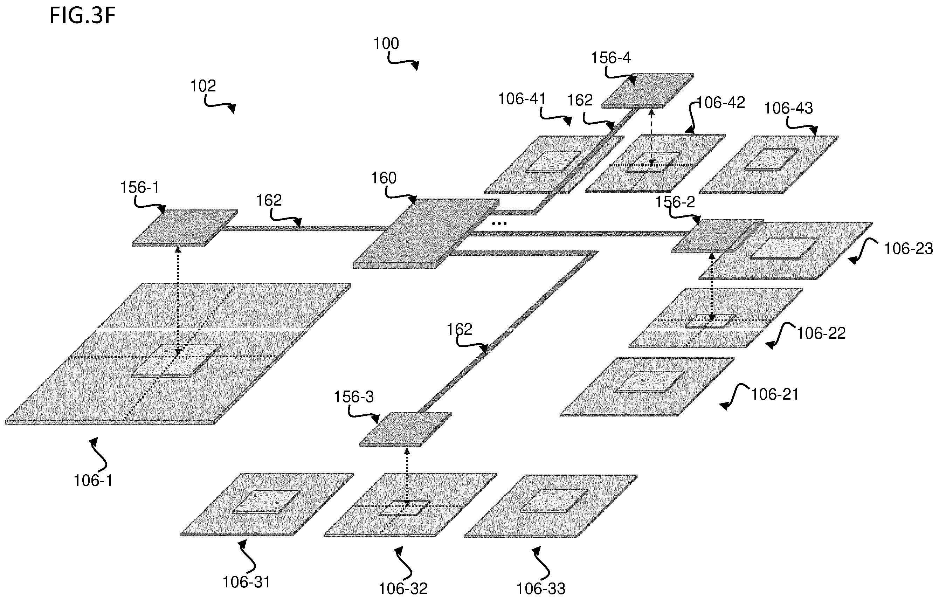

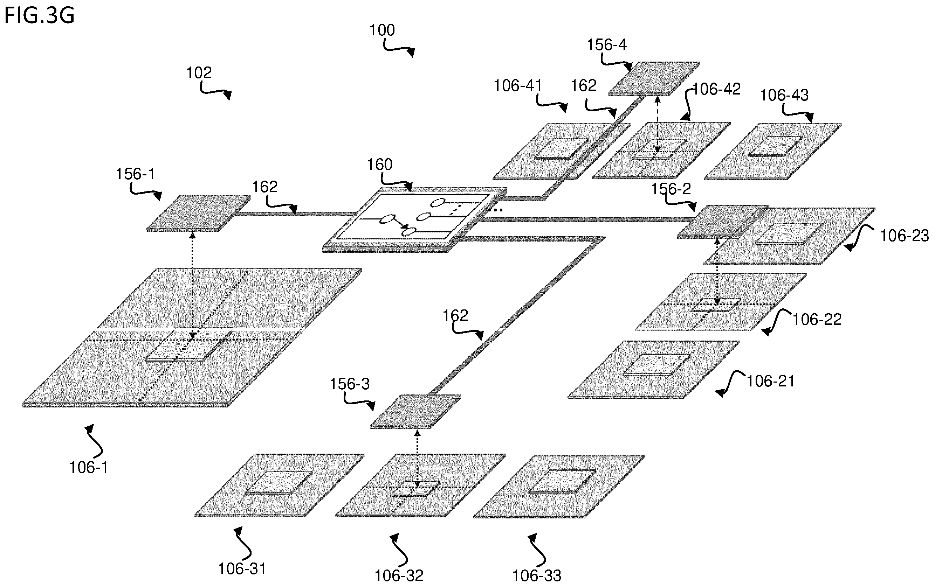

The various above described features may be combined in a device-to-device communication system 100, as illustrated in **FIG.3E** to **FIG.3G****.** Note that reference numerals of sub-components have been omitted for the sake of a better illustration only. The multiplexing structure 160 illustrated in FIG.3E may be a 1:2 splitter, and the multiplexing structure160 illustrated in FIG.3F may be a 1:X splitter (with X being an integer) illustrated by "..." in FIG.3F. However, the multiplexing structure160 may also be configured as a switch or a brigde as illustrated in FIG.3G, or any combination therof.

Each of the antennas 156-1, 156-2, 156-3, 156-4 may be coupled to one or more packages 106-1, 106-21, 106-22, 106-23, 106-31, 106-32, 106-34, 106-41, 106-42, 106-43. However, the shown arrangement and number of packages per antenna 156-1, 156-2, 156-3, 156-4 of the communication link structure is chosen for illustration purpose only to illustrate the principle of the device-to-device communications system 100.

Further, the device-to-device communication system 100 may include two or more multiplexing structures 160 coupled to or interconnected with each other. Each of the multiplexing structures 160 may have one or more antennas 158-j, and one or more corresponding packages 106-N wirelessly coupled thereto. This way, a complex routing network may be be provided in an easy manner. Further, a module having the plurality of packages may have a plurality of device-to-device communication systems 100 that are communicativly coupled with each other or are communication systems 100 that are independent from each other. As an example, a package may be communicatively coupled to two or more device-to-device communication systems 100 at the same time. The two or more device-to-device communication systems 100 may be communicatively independent from each other. As an example, the two or more device-to-device communication systems 100 may be galavanicly isolated, e.g. direct current (DC)-wise, or disconnected, e.g. alternating current (AC)-wise,from each other. As an example, the antenna of the package may be a dual band or wide band antenna, and an antenna of a first communication system may support a first frequency band of the antenna of the package, and an antenna of a second communication system may support a second frequency band of the antenna of the package, wherein the first frequency band and the second frequency band are not overlapping. In other words, two or more device-to-device communication systems 100 may be configured to use non-overlapping wireless communication frequencies.

The communication distance between the transmitting package and receiving package(s) may be extended in an easy manner using the waveguide structure 162 and the multiplexing structure 160 of the communication link structure. This way, the device-to-device communication system 100 provides a more flexible layout design for modules having a plurality of devices, e.g. packages, chiplets, etc. Thus, modules requiring a complex routing layout may be provided in an easy manner.

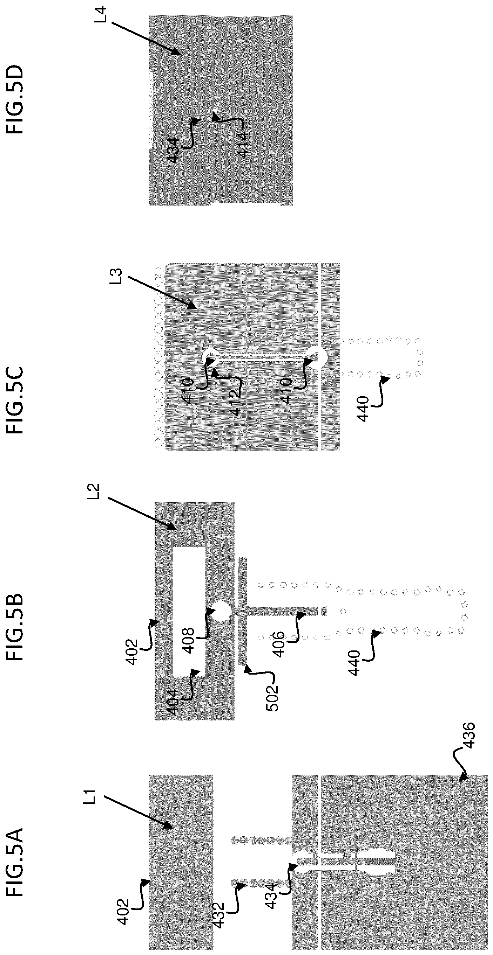

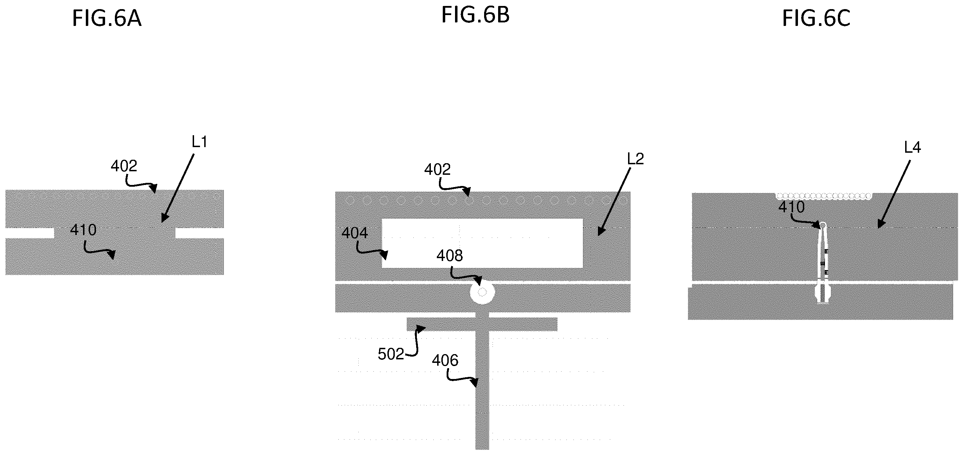

**FIG.4A** to **FIG.4D****,** **FIG.5A** to **FIG.5D****,** and **FIG.6A** to **FIG.6C** illustrate antenna structures for a device-to-device communication system. Illustrated are a first antenna structure (FIG.4A to FIG.4D), a second antenna structure (FIG.5A to FIG.5D), and a third antenna structure (FIG.6A to FIG.6C). Details of antenna layouts that may be used in the device-to-device communication system are shown in layer-by-layer illustration in FIG.4A to FIG.4D, FIG.5A to FIG.5D, and FIG.6A to FIG.6C, respectively. A backside ground plane may be arranged in L4. Each design illustrated in **FIG.4A** to **FIG.4D****,** **FIG.5A** to **FIG.5D****,** and **FIG.6A** to **FIG.6C** has a backside ground plane in L4. The design shown in FIG.6A to FIG.6C is free of metallization on L3.

The third layer patch L3 of the antenna arranged on the ground layer patch is illustrated in FIG.4C, and FIG.5C. In other words, every design illustrated in **FIG.4A** to **FIG.4D****,** **FIG.5A** to **FIG.5D****,** and **FIG.6A** to **FIG.6C** has a backside ground plane in L4 but not every design uses a third patch layer L3 . For instance, the design illustrated in FIG.6 A to FIG.6C shows a design without third patch layer L3. When there is a backside ground plane, e.g. in L4, the third patch layer L3 may serve as a resonant frequency tuning element. When there is no backside ground plane in L4, the third patch layer L3 may acts as a retarded ground plane for the folded patch formed by a first patch layer L1 and a second layer patch L2 and vias between the patches in the first patch layer L1 and the second patch layer L2.

Thus, the antenna design illustrated in FIG.6A to 6C may be used for antenna substrates without back side ground plane.

The second layer patch L2 may be formed above the ground layer patch L4 (shown in FIG.4B, FIG.5B, and FIG.6B), e.g. over the third layer patch L3 (shown in FIG.4B, and FIG.5B).

The first layer patch L1 may be formed over the second layer patch L2 (shown in FIG.4A, FIG.5A, and FIG.6A).

Note that the first layer patch L1 and the second layer patch L2 are stiched together by a via array 402 at one side of the patches forming the folded patch antenna.

Further note, that the first layer patch L1 and the second layer patch L2 may have about the same size, e.g. are congruent to eachother. Thus, edges of the first layer patch L1 and the second layer patch L2 may be coupled to eachother. However, the first layer patch L1 and the second layer patch L2 may have different sizes.

Further note, that the feed probe 410 is coupled to the first layer patch L1. Thus, the illustrated microstrip line 406 may not be used as feed but as a radiation component. Hence, the second layer patch L4 may be free of slits adjacent to the microstrip line 406 that are conventionally used for impedance matching.

Further note that the ground layer patch L3 has about the same size as the first layer patch L1 and the second layer patch L2. Here, the ground layer patch L3 may be be used for tuning the frequency of the antenna.

The antenna strucutres illustrated in FIG.4A to FIG.6C may be used for the antennas of the wireless communication connection between the package and the communication link structure, e.g. as an antennas in a package and/or as an antenna in the communication link structure, as described above.

The antennas of the communication link structure may be configured as variants of a folded patch antenna. This way, the antenna design simplifies the manufacturing of the communication link structure.

The folded patch antennas may be configured to have a wide half power beam width both in E plane and H plane. This way, the antenna may facilitate a broadcast ability of the device-to-device communication system.

The antennas of the package and the communication link structure may be configured to have a resonant frequency at about 9 GHz for example. The resonant frequency of the antenna of the communication link structure may be slightly higher than 9 GHz since the presence of the antenna of the package may capacitively load the antenna of the communication link structure. The capacitive loading may cause the resonant frequency of the antenna of the communication link structure to move to a lower frequency.

Illustratively, the antennas may be folded patch antennas on a multilayer printed circuit board. The antenna radiate towards the corresponding antenna of the wireless communication link Tx, RxN on its top with wide half power beamwidths on both the E plane and the H plane to support multidrop communication. The antenna may include a patch on a first layer (also denoted as L1 patch or first level patch L1), a patch on a second layer (also denoted as L2 patch or second layer patch L2), (optionally/design specific) a patch on a third layer (also denoted as L3 patch or third layer patch L3), and a patch on a layer or solid ground plane - also denoted as L4 patch, ground layer patch L4, or solid ground plane L4.

Each of the patch antennas is configured to provide a wide half power beam width in both E plane and H plane, and may serve as a broadcast antenna. The width of the L1 patch, the L2 patch, the L3 patch and the L4 patch may be λ/2 while its length may be λ/4 with λ being the wavelength corresponding to the resonant frequency of the antenna, e.g. about 9 GHz.

The presence of a backside ground on the antenna substrate may alter the impedance and radiation behavior of a folded patch antenna. The L4 patch may have the same dimension as the L1 patch, the L2 patch and the (optional) L3 patch.

The exemplary antenna layout illustrated layer-by-layer in FIG.6A to FIG.6C operates in a condition which does not involve a back side ground plane of the antenna substrate. In this design, the antenna may be constituted of two equal size patches - e.g. the L1 patch (FIG.6A) and the L2 patch (FIG.6B). The L1 patch and the L2 patch may be stitched together through the array of vias 402.

The L2 patch may include a rectangular shaped slot 404. The slot 404 may extend the current path along the folded patch. This way, a compact antenna may be provided.

The L2 patch may include a microstrip line 406. The microstrip line 406 encourages a vertical radiation emission.

The L2 patch may (optionally) include a stub structure 502 (see FIG.5B and FIG.6B). The stubs 502 may further reduce the size of the overall folded patch. However, the antenna design of FIG.4A to FIG.4D may also use the stub structure 502.

The folded patch antenna may be fed through a probe feeding 410 going from the L3 patch to the L1 patch through a circular aperture 408 in the L2 patch.

A variant of the folded patch antenna is shown in FIG.5A to FIG.5D. This variant may address alterations of the antenna behavior imposed by the existence of a back side ground plane of the antenna substrate. Compared to the antenna structure without the backside ground plane (FIG.6A to FIG.6C), the antenna may have a different probe feeding. Here, instead of probe feeding the L1 patch, the antenna is fed through a transmission line on the L3 patch underneath the strip on the L2 patch. The feeding signal couples to the folded patch through a circular aperture in the L3 patch and the L2 patch. Thus, the folded patch antenna may be formed by the rectangular L1 patch and L2 patch that are connected to each other through the array of vias 402. The folded patch may be floating on top of the L3 patch. The folded patch antenna may intentionally introduce a rectangular cut slot 404 in the L2 patch to extend the current path along the folded patch, and this way reduces the antenna size.

In contradiction to a traditional folded patch antenna with a ground plane much larger than the patch, the L3patch may have a same size as the L1 patch and the L2 patch or may have a size that is slightly larger than the L1 patch and L2 patch, e.g. less than about 10 % larger. The size of the L3 patch and its distance away from the folded patch antenna formed by the coupled L1-L2 patches may have significant impact on the folded patch antenna resonant frequency. Thus, the L3 patch may serve as a resonant frequency tuning element to tune the folded patch antenna resonant frequency, and hence may have a completely different purpose from a conventional folded patch antenna ground plane.

The patches on L1 and L2 which are connected by the vias 402 may form a magnetic dipole and may serve as a first radiation source. Besides, the top surface of L1 patch and the strip on L2 406 may have currents almost point to the same direction. This way, the top surface of the L1 patch anf the strip on L2 406 may act as a second radiation source. The second radiation source may broaden the half power beam width in both the E plane and H plane. This, way the folded patch antenna may show an enhanced broadcast capability. Thus, radiation may occur in a completely different manner in the folded patch antenna compared to a conventional folded patch antenna in which the radiation occurs due to a slot formed by the top and bottom patches that both are shorted to the ground plane.

In other words, the antenna illustrated in FIG.6A to FIG.6C may include a ground layer L4; a second layer patch L2 over the ground layer L4; a first layer patch L1 over the second layer patch L2; a via array 402 may be arranged at at least one edge of the first layer patch L1 and second layer patch L2 and connecting the first layer patch L1 with the second layer patch L2. At least one feed probe 410 may be configured to feed the first layer patch L1.

The ground layer L4, the second layer patch L2 and the first layer patch L1 may be formed on the same side of the carrier 154 (see FIG.1A to FIG.1C). The carrier 154 may be free of back side ground layer.

A transmission line 406 may be arranged in the layer of the second layer patch L2 and connected to the second layer patch L2. Here, the transmission line 406 may be galvanically isolated (e.g.DC-wise) or disconnected (e.g. AC-wise) from the feed probe 410.

Alternatively, or in addition, the antenna illustrated in FIG.4A to FIG.5D may include a carrier 154, a ground layer L4; a third layer patch L3 over the ground layer L4, wherein the third layer patch L3 may include a waveguide structure 450 may be arranged in the layer of the third layer patch L3 and coupled to the third layer patch L3 and a first aperture 412; a second layer patch L2 over the third layer patch L3, and a microstrip line 406 may be arranged in the layer of the second layer patch L2 and connected to the second layer patch L2, and wherein the second layer patch L2 may include a second aperture 408; a first layer patch L1 over the second layer patch L2; a via array 402 may be arranged at at least one edge of the first layer patch L1 and second layer patch L2 and connecting the first layer patch L1 with the second layer patch L2. The ground layer L4, the second layer patch L2 and the first layer patch L1 may be formed on a first side of the carrier 154. The carrier 154 may include a back side ground layer on a second side opposite to the first side. A feed probe 410 may couple the first layer patch L1 with the waveguide structure 450 in the layer of the third layer patch L3 through the first aperture 412, the second aperture 408 and the waveguide structure 450.

Rerferring to the antennas in FIG.4A to FIG.6C, the second layer patch L2 may include a slot 404. The slot 404 may include a rectangular shape or any other kind of shape suitable to tune the frequency of the antenna. The slot 404 may be enclosed by the second layer patch L2. The feed probe 410 may be arranged adjacent to the slot 404.

The first layer patch L1 and/or the second layer patch L2 may include a rectangular shape. The first layer patch L1 and the second layer patch L2 may have about an equal size. The first layer patch L1 and the second layer patch L2 may have about an equal shape. The first layer patch L1 and the second layer patch L2 may be arranged superimposed. The first layer patch L1 and the second layer patch L2 may be arranged congruent.

The transmission line 406 may be connected to an edge of the second layer patch L2 opposite of the edge having the via array 402. The vias of the via array 402 may be electrically coupled in parallel.

The second layer patch L2 may be free of slits adjacent to the microstrip line.

One or more stubs 502 may be connected to the microstrip line 406. The stubs 502 may be configured as cross stub structure 502. The stubs may be configured as a plurality of cross stub structure 502 coupled along the transmission line 406.

A dielectric may be formed between the ground layer L4 and the second layer patch L2, and a dielectric may be formed between the second layer patch L2 and the first layer patch L1.

At least one of the first layer patch L1 and the second layer patch L2 may include a width that may be about λ/2, wherein the λ may be the wavelength corresponding to the designated resonant frequency of the antenna.

At least one of the first layer patch L1 and the second layer patch L2 may include a length that may be about λ/4, wherein the λ may be the wavelength corresponding to the designated resonant frequency of the antenna.

The first layer patch L1 and the second layer patch L2 may have about the same length and about the same width.

The antenna may be a folded patch antenna.

The ground layer patch L4 may include a rectangular shape. The ground layer patch L4 may have about an equal size to at least one of the first layer patch L1 and the second layer patch L2. The ground layer patch L4 may may have about an equal shape to at least one of the first layer patch L1 and the second layer patch L2. The ground layer patch L4, the first layer patch L1, and the second layer patch L2 may be arranged superimposed. The ground layer patch L4, the first layer patch L1, and the second layer patch L2 may be arranged congruent.

The layer of the first layer patch L1 further may include a feed network 432, a connector 434, and a matching network 436. Note that the vias 440 of the feed network 432 are illustrated in the L2 patch and in the L3 patch in FIG.4B/C, and FIG.5B/C.

The communication link structure (102, see above) for a chip module may include on an antenna substrate, e.g. a flexible substrate, a transmission structure, a first antenna having a first feed, and a second antenna having a second feed, wherein the transmission structure electrically conductively couples the first feed with the second feed. The communication link structure may include a thickness of less than 125 µm. In other words, the thickness of the substrate 154 of the communication link structure (see also FIG.1A to 1C) may be less than about 100 µm (micrometre) for example.

The substrate may be a printed circuit board. At least one of the first antenna and the second may be configured according to one of the above describes examples.

## Claims

1. A communication system (100), comprising:
a first carrier (114-1) and a first antenna (158-1) mounted on the first carrier (114-1);
a second carrier (154-1) and a second antenna (156-1) mounted on the second carrier (154-1), wherein the first antenna (158-1) and the second antenna (156-1) are arranged relative to each other that the first antenna (158-1) and the second antenna (156-1) can establish wireless link for transmission of a signal;
a third carrier (154-2) and a third antenna (156-2) mounted on the third carrier (154-2);
a transmission structure coupling the second antenna (156-1) and the third antenna (156-2), wherein the communication system is configured to propagate the signal through the transmission structure;
a fourth carrier (114-2) and a fourth antenna (158-2) mounted on the fourth carrier (114-2), wherein the third antenna (156-2) and the fourth antenna (158-2) are arranged relative to each other that the third antenna (156-2) and the fourth antenna (158-2) can establish wireless link for transmission of the signal;
wherein at least one of the antennas comprises:
a ground layer patch;
a second layer patch over the ground layer patch;
a first layer patch over the second layer patch;
a via array (402) arranged at at least one edge of the first layer patch and second
layer patch and connecting the first layer patch with the second layer patch; and
at least one feed probe (410) configured to couple the ground layer patch with the first layer patch.

2. The system (100) of claim 1,
wherein the first carrier (114-1) and the second carrier (154-1) are arranged at a predefined first distance from each other.

3. The system (100) of claim 2,
wherein the first distance is smaller than or equal to about three times the wavelength of a wireless signal transmitted between the first antenna (158-1) and the second antenna (156-1).

4. The system (100) of any one of claims 1 to 3,
wherein the first antenna (158-1) and the second antenna (156-1) are galvanically separated from each other.

5. The system (100) of any one of claims 1 to 4,
wherein the first carrier (114-1) and the first antenna (158-1) are encapsulated in a first package (106-1), and wherein the fourth carrier (114-2) and the fourth antenna (158-2) are encapsulated in a second package (106-2).

6. The system (100) of any one of claims 1 to 5, further comprising a microstrip line (406) arranged in the layer of the second layer patch and coupled to the second layer patch, wherein the microstrip line (406) is galvanically isolated or disconnected from the feed probe (410).

7. The system (100) of any one of claims 1 to 6, further comprising a microstrip line (406) coupled to an edge of the second layer patch opposite of the edge having the via array (402).

8. The system (100) of claim 7, further comprising one or more stubs coupled to the microstrip line (406).

9. The system (100) of any one of claim 7 or claim 8, wherein at least one of the antennas comprises:
a carrier,
a ground layer patch;
a third layer patch over the ground layer patch, wherein the third layer patch comprises a waveguide structure (162, 450) arranged in the layer of the third layer patch and coupled to the third layer patch and a first aperture (412);
a second layer patch over the third layer patch, and the microstrip line (406) arranged in the layer of the second layer patch and coupled to the second layer patch, and wherein the second layer patch comprises a second aperture (408);
a first layer patch over the second layer patch;
a via array (402) arranged at at least one edge of the first layer patch and second layer patch and connecting the first layer patch with the second layer patch;
wherein the ground layer patch, the second layer patch and the first layer patch are formed on a first side of the carrier, and wherein the carrier comprises a back side ground layer on a second side opposite to the first side; and
a feed probe (410) coupling the first layer patch with the waveguide structure (162, 450) in the layer of the third layer patch through the first aperture (412), the second aperture (408) and the microstrip line (406).

10. The system (100) of claim 9,
wherein the second layer patch is free of slits adjacent to the microstrip line (406).

11. The system (100) of claim 9 or 10, further comprising one or more stubs coupled to the microstrip line (406).

12. The system (100) of any one of claims 9 to 11,
wherein the antenna is a folded patch antenna.

13. The system (100) of any one of claims 9 to 12,
wherein the vias of the via array (402) are electrically coupled in parallel.

14. The system (100) of any one of claims 1 to 13, wherein the transmission structure comprises on a flexible substrate (154):
a waveguide structure (162, 450),
the second antenna (156-1) having a first feed, and
the third antenna (156-2) having a second feed, wherein the waveguide structure (162, 450) electrically couples the first feed with the second feed.

## Patentansprüche

1. Kommunikationssystem (100), umfassend:
einen ersten Träger (114-1) und eine auf dem ersten Träger (114-1) montierte erste Antenne (158-1);
einen zweiten Träger (154-1) und eine auf dem zweiten Träger (154-1) montierte zweite Antenne (156-1), wobei die erste Antenne (158-1) und die zweite Antenne (156-1) so relativ zueinander angeordnet sind, dass die erste Antenne (158-1) und die zweite Antenne (156-1) eine drahtlose Verbindung zur Übertragung eines Signals herstellen können;
einen dritten Träger (154-2) und eine auf dem dritten Träger (154-2) montierte dritte Antenne (156-2);
eine Übertragungsstruktur, die die zweite Antenne (156-1) und die dritte Antenne (156-2) koppelt, wobei das Kommunikationssystem ausgelegt ist zum Ausbreiten des Signals durch die Übertragungsstruktur;
einen vierten Träger (114-2) und eine auf dem vierten Träger (114-2) montierte vierte Antenne (158-2), wobei die dritte Antenne (156-2) und die vierte Antenne (158-2) so relativ zueinander angeordnet sind, dass die dritte Antenne (156-2) und die vierte Antenne (158-2) eine drahtlose Verbindung zur Übertragung des Signals herstellen können;
wobei mindestens eine der Antennen Folgendes umfasst:
ein Masseschichtpatch;
ein zweites Schichtpatch über dem Masseschichtpatch;
ein erstes Schichtpatch über dem zweiten Schichtpatch;
ein Durchkontaktierungs-Array (402), das an mindestens einem Rand des ersten Schichtpatch und des zweiten Schichtpatch angeordnet ist und das erste Schichtpatch mit dem zweiten Schichtpatch verbindet; und
mindestens eine Einspeisesonde (410), ausgelegt zum Koppeln des Masseschichtpatch mit dem ersten Schichtpatch.

2. System (100) nach Anspruch 1,
wobei der erste Träger (114-1) und der zweite Träger (154-1) in einem vordefinierten ersten Abstand voneinander angeordnet sind.

3. System (100) nach Anspruch 2,
wobei der erste Abstand kleiner als oder gleich etwa dem Dreifachen der Wellenlänge eines zwischen der ersten Antenne (158-1) und der zweiten Antenne (156-1) übertragenen drahtlosen Signals ist.

4. System (100) nach einem der Ansprüche 1 bis 3,
wobei die erste Antenne (158-1) und die zweite Antenne (156-1) galvanisch voneinander getrennt sind.

5. System (100) nach einem der Ansprüche 1 bis 4,
wobei der erste Träger (114-1) und die erste Antenne (158-1) in einer ersten Package (106-1) eingekapselt sind und wobei der vierte Träger (114-2) und die vierte Antenne (158-2) in einer zweiten Package (106-2) eingekapselt sind.

6. System (100) nach einem der Ansprüche 1 bis 5, ferner umfassend: eine Mikrostreifenleitung (406), die in der Schicht des zweiten Schichtpatch angeordnet und mit dem zweiten Schichtpatch gekoppelt ist, wobei die Mikrostreifenleitung (406) galvanisch von der Einspeisesonde (410) isoliert oder getrennt ist.

7. System (100) nach einem der Ansprüche 1 bis 6, ferner umfassend: eine Mikrostreifenleitung (406), die mit einem Rand des zweiten Schichtpatch gegenüber dem Rand mit dem Durchkontaktierungs-Array (402) gekoppelt ist.

8. System (100) nach Anspruch 7, ferner umfassend: einen oder mehrere mit der Mikrostreifenleitung (406) gekoppelte Stutzen.

9. System (100) nach einem der Ansprüche 7 oder 8, wobei mindestens eine der Antennen Folgendes umfasst:
einen Träger,
ein Masseschichtpatch;
ein drittes Schichtpatch über dem Masseschichtpatch, wobei das dritte Schichtpatch eine in der Schicht des dritten Schichtpatch angeordnete und mit dem dritten Schichtpatch und einer ersten Öffnung (412) gekoppelte Wellenleiterstruktur (162, 450) umfasst;
ein zweites Schichtpatch über dem dritten Schichtpatch und die Mikrostreifenleitung (406), die in der Schicht des zweiten Schichtpatch angeordnet und mit dem zweiten Schichtpatch gekoppelt ist, und wobei das zweite Schichtpatch eine zweite Öffnung (408) umfasst;
ein erstes Schichtpatch über dem zweiten Schichtpatch;
ein Durchkontaktierungs-Array (402), das an mindestens einem Rand des ersten Schichtpatch und des zweiten Schichtpatch angeordnet ist und das erste Schichtpatch mit dem zweiten Schichtpatch verbindet;
wobei das Masseschichtpatch, das zweite Schichtpatch und das erste Schichtpatch auf einer ersten Seite des Trägers gebildet sind und wobei der Träger eine Rückseitenmasseschicht auf einer zweiten Seite gegenüber der ersten Seite umfasst; und
eine Einspeisesonde (410), die das erste Schichtpatch mit der Wellenleiterstruktur (162, 450) in der Schicht des dritten Schichtpatch durch die erste Öffnung (412), die zweite Öffnung (408) und die Mikrostreifenleitung (406) koppelt.

10. System (100) nach Anspruch 9,
wobei das zweite Schichtpatch frei von an die Mikrostreifenleitung (406) angrenzenden Schlitzen ist.

11. System (100) nach Anspruch 9 oder 10, ferner umfassend: einen oder mehrere mit der Mikrostreifenleitung (406) gekoppelte Stutzen.

12. System (100) nach einem der Ansprüche 9 bis 11,
wobei die Antenne eine gefaltete Patchantenne ist.

13. System (100) nach einem der Ansprüche 9 bis 12,
wobei die Durchkontaktierungen des Durchkontaktierungs-Arrays (402) elektrisch parallelgeschaltet sind.

14. System (100) nach einem der Ansprüche 1 bis 13, wobei die Übertragungsstruktur auf einem flexiblen Substrat (154) Folgendes umfasst:
eine Wellenleiterstruktur (162, 450),
wobei die zweite Antenne (156-1) eine erste Einspeisung aufweist und
wobei die dritte Antenne (156-2) eine zweite Einspeisung aufweist, wobei die Wellenleiterstruktur (162, 450) die erste Einspeisung elektrisch mit der zweiten Einspeisung koppelt.

## Revendications

1. Système de communication (100), comprenant :
un premier support (114-1) et une première antenne (158-1) montée sur le premier support (114-1) ;
un deuxième support (154-1) et une deuxième antenne (156-1) montée sur le deuxième support (154-1), la première antenne (158-1) et la deuxième antenne (156-1) étant disposées l'une par rapport à l'autre de telle sorte que la première antenne (158-1) et la deuxième antenne (156-1) puissent établir une liaison sans fil pour la transmission d'un signal ;
un troisième support (154-2) et une troisième antenne (156-2) montée sur le troisième support (154-2) ;
une structure de transmission couplant la deuxième antenne (156-1) et la troisième antenne (156-2), le système de communication étant configuré pour propager le signal à travers la structure de transmission ;
un quatrième support (114-2) et une quatrième antenne (158-2) montée sur le quatrième support (114-2), la troisième antenne (156-2) et la quatrième antenne (158-2) étant disposées l'une par rapport à l'autre de telle sorte que la troisième antenne (156-2) et la quatrième antenne (158-2) puissent établir une liaison sans fil pour la transmission du signal ;
au moins une des antennes comprenant :
un patch de couche de masse ;
un deuxième patch de couche sur le patch de couche du masse ;
un premier patch de couche sur le deuxième patch de couche ;
un réseau de trous d'interconnexion (402) disposé sur au moins un bord du premier patch de couche et du deuxième patch de couche et reliant le premier patch de couche au deuxième patch de couche ; et
au moins une sonde d'alimentation (410) configurée pour coupler le patch de couche de masse au premier patch de couche.

2. Système (100) selon la revendication 1,
dans lequel le premier support (114-1) et le deuxième support (154-1) sont disposés à une première distance prédéfinie l'un de l'autre.

3. Système (100) selon la revendication 2,
dans lequel la première distance est inférieure ou égale à environ trois fois la longueur d'onde d'un signal sans fil transmis entre la première antenne (158-1) et la deuxième antenne (156-1).

4. Système (100) selon l'une quelconque des revendications 1 à 3,
dans lequel la première antenne (158-1) et la deuxième antenne (156-1) sont séparées galvaniquement l'une de l'autre.

5. Système (100) selon l'une quelconque des revendications 1 à 4,
dans lequel le premier support (114-1) et la première antenne (158-1) sont encapsulés dans un premier boîtier (106-1), et dans lequel le quatrième support (114-2) et la quatrième antenne (158-2) sont encapsulés dans un deuxième boîtier (106-2).

6. Système (100) selon l'une quelconque des revendications 1 à 5, comprenant en outre une ligne microruban (406) agencée dans la couche du deuxième patch de couche et couplée au deuxième patch de couche, la ligne microruban (406) étant isolée galvaniquement ou déconnectée de la sonde d'alimentation (410).

7. Système (100) selon l'une quelconque des revendications 1 à 6, comprenant en outre une ligne microruban (406) couplée à un bord du deuxième patch de couche opposé au bord ayant le réseau de trous d'interconnexion (402).

8. Système (100) selon la revendication 7, comprenant en outre un ou plusieurs tronçons couplés à la ligne microruban (406).

9. Système (100) selon l'une quelconque de la revendication 7 ou de la revendication 8, dans lequel au moins l'une des antennes comprend :
un support,
un patch de couche de masse ;
un troisième patch de couche sur le patch de couche de masse, le troisième patch de couche comprenant une structure de guide d'ondes (162, 450) disposée dans la couche du troisième patch de couche et couplée au troisième patch de couche et à une première ouverture (412) ;
un deuxième patch de couche sur le troisième patch de couche, et la ligne microruban (406) disposée dans la couche du deuxième patch de couche et couplée au deuxième patch de couche, et le deuxième patch de couche comprenant une deuxième ouverture (408) ;
un premier patch de couche sur le deuxième patch de couche ;
un réseau de trous d'interconnexion (402) disposé sur au moins un bord du premier patch de couche et du deuxième patch de couche et reliant le premier patch de couche au deuxième patch de couche ;
le patch de couche de masse, le deuxième patch de couche et le premier patch de couche étant disposés sur une première face du support, et le support comprenant une couche de masse de face arrière sur une deuxième face, opposée à la première face ; et
une sonde d'alimentation (410) couplant le premier patch de couche à la structure de guide d'ondes (162, 450) dans la couche du troisième patch de couche à travers la première ouverture (412), la seconde ouverture (408) et la ligne microruban (406).

10. Système (100) selon la revendication 9,
dans lequel le deuxième patch de couche est exempt de fentes adjacentes à la ligne microruban (406).

11. Système (100) selon la revendication 9 ou 10, comprenant en outre un ou plusieurs tronçons couplés à la ligne microruban (406).

12. Système (100) selon l'une quelconque des revendications 9 à 11,
dans lequel l'antenne est une antenne patch repliée.

13. Système (100) selon l'une quelconque des revendications 9 à 12,
dans lequel les trous d'interconnexion du réseau de trous d'interconnexion (402) sont couplés électriquement en parallèle.

14. Système (100) selon l'une quelconque des revendications 1 à 13, dans lequel la structure de transmission comprend sur un substrat flexible (154) :
une structure de guide d'onde (162, 450),
la deuxième antenne (156-1) ayant une première alimentation, et
la troisième antenne (156-2) ayant une deuxième alimentation, la structure de guide d'ondes (162, 450) couplant électriquement la première alimentation à la deuxième alimentation.
